(19) Europäisches Patentamt
European Patent Office
Office européen des brevets

(11) Veröffentlichungsnummer: **0 247 299 B1**

(12) **EUROPÄISCHE PATENTSCHRIFT**

(45) Veröffentlichungstag der Patentschrift: **12.09.90**

(51) Int. Cl.⁵: **B01D 53/34**

(21) Anmeldenummer: **87103304.9**

(22) Anmeldetag: **07.03.87**

(54) **Verfahren zur Rauchgasentschwefelung.**

(30) Priorität: **25.04.86 DE 3614005**

(43) Veröffentlichungstag der Anmeldung:
**02.12.87 Patentblatt 87/49**

(45) Bekanntmachung des Hinweises auf die Patenterteilung:
**12.09.90 Patentblatt 90/37**

(84) Benannte Vertragsstaaten:
**AT BE CH DE ES FR GB GR IT LI LU NL SE**

(56) Entgegenhaltungen:
**EP-A- 0 012 170**
**US-A- 4 107 015**

**Die Akte enthält technische Angaben, die nach dem Eingang der Anmeldung eingereicht wurden und die nicht in dieser Patentschrift enthalten sind.**

(73) Patentinhaber: **Vereinigte Elektrizitätswerke Westfalen AG, Rheinlanddamm 24, D-4600 Dortmund 1(DE)**

(72) Erfinder: **Rickert, Hans, Prof. Dr., Wilhelm-Dresing-Strasse 37, D-4600 Dortmund 50(DE)**
Erfinder: **Müller, Peter, Dipl.-Ing., Kleine Schwerter Strasse 1, D-4600 Dortmund 41(DE)**
Erfinder: **Holzäpfel, Günter, Dr., Silberhecke 51, D-4600 Dortmund 30(DE)**

(74) Vertreter: **Patentanwälte Meinke und Dabringhaus Dipl.-Ing. J. Meinke Dipl.-Ing. W. Dabringhaus, Westenhellweg 67, D-4600 Dortmund 1(DE)**

**EP 0 247 299 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung richtet sich auf ein Verfahren zur Rauchgasentschwefelung, wobei das im Rauchgas enthaltene $SO_2$ in einer wässrigen Lösung absorbiert und die entstandene sulfithaltige Lösung elektrolytisch aufbereitet . wird. Durch Schwefeldioxid, das durch die Verbrennung fossiler Brennstoffe in die Rauchgase gelangt, kommt es zu Schäden bei Tieren und Pflanzen, Bauwerken und Maschinen u. dgl. Es sind daher schon eine Fülle von Rauchgasentschwefelungsverfahren bekannt, mit denen es in der Regel gelingt, die Schwefeldioxidemissionen um mehr als 90% abzusenken. Dabei geht man im wesentlichen großtechnisch nach dem sogenannten Calciumverfahren vor. Bei dieser Technologie wird Kalkhydrat Ca $(OH)_2$ oder feingemahlener Kalkstein $CaCO_3$ als Absorptionsmittel eingesetzt. Dabei liegen diese Mittel wegen ihrer schlechten Wasserlöslichkeit als Suspension vor. Als ein Produkt wird bei dieser Verfahrensweise ein verwertbarer Gips gewonnen. Vereinfacht laufen dabei die folgenden Reaktionen ab:

$$Ca(OH)_2 + SO_2 = CaSO_3 + H_2O$$
$$CaSO_3+2H_2O + 1/2\ O_2 = Ca\ SO_4\ 2H_2O$$

Weiter ist ein Verfahren bekannt (siehe z. B. H. Kau, in Dechema Monographien, Band 98, Verlag Chemie, Weinheim, 1985, s. 291 ff.), welches großtechnisch allerdings noch nicht eingesetzt wird. Hierbei wird das Schwefeldioxid des Rauchgases in einem ersten Reaktionsgefäß, dem Absorber, durch eine wässrige Lösung von Natronlauge und Natriumsulfat absorbiert, wobei Natriumsulfit $Na_2SO_3$ und Natriumhydrogensulfit $NaHSO_3$ entstehen. Das Sulfit wird in einer zweiten Reaktionskammer oxidiert, wodurch eine Natriumsulfatlösung erhalten wird. Diese Natriumsulfatlösung wird in einem dritten Schritt einer sogenannten Membranelektrolyse unterworfen, bei der das eingesetzte Ausgangsprodukt Natronlauge sowie Schwefelsäure entstehen.

Ausgehend von diesem bekannten Stand der Technik, wie er andeutungsweise auch der DE-A 33 15 626 zu entnehmen ist, ist es Aufgabe der Erfindung, eine Rauchgasentschwefelung vorzuschlagen, die sehr viel weniger aufwendig als diese bekannte elektrolytische Rauchgasentschwefelung ist, die apparativ einfacher ist und nicht die Gefahr in sich birgt, daß Knallgas erzeugt wird, was bei der bekannten Verfahrensweise durch die anodische $O_2$-Entwicklung und die kathodische $H_2$-Entwicklung durchaus möglich sein kann.

Diese Aufgabe wird gemäß der Erfindung dadurch gelöst, daß an der Anode eine elektrochemische Oxidation von $SO_3^{2-}$-Ionen zu $SO_4^{2-}$-Ionen und eine gleichzeitige Bildung von $H^+$-Ionen und damit die Bildung von $H_2SO_4$ unter Umgehung einer Sauerstoffentwicklung erfolgt.

Mit der Erfindung wird erreicht, daß der wenigsten 3-stufige, bekannte Prozeß auf einen zweistufigen Rauchgasentschwefelungsprozeß zurückgeführt wird, der im wesentlichen aus der $SO_2$-Absorption besteht und einer neuen Art von oxidativer Elektrolyse.

Bei dieser neuen Art der Elektrolyse laufen im folgende Vorgänge ab:

An der Anode die elektrochemische Oxidation von Sulfit zu Sulfat und Bildung von $H^+$-Ionen, so daß insgesamt $H_2SO_4$ entsteht, wobei an der Anode jegliche Sauerstoffbildung unterbunden ist.

An der Kathode wird eine Bildung von Natronlauge und Wasserstoff erreicht, wie dies an sich bekannt ist.

Erkennbar kommt es zu keinerlei Knallgasentwicklung.

In Ausgestaltung sieht die Erfindung Maßnahmen entsprechend der Unteransprüche vor, die zum Teil für sich aus dem oben zitierten Stand der Technik bekannt sind, allerdings nützliche Weiterbildungen der vorliegenden Erfindung darstellen.

Dabei ist wesentlich, daß die Nachteile der bisher bekannten Rauchgasentschwefelungsverfahren vermieden werden, die unter anderem darin bestehen, daß die Oxidation von Sulfit zum Sulfat stets getrennt in Einzelschritten erfolgt, wobei in den meisten Fällen zusätzliche Reaktoren eingesetzt werden müssen. Durch die Verbindung des Oxidationsschrittes und der Elktrolyse des Sulfats zu Schwefelsäure und wiederverwendbarer Natronlauge werden alle diese Nachteile vermieden.

Enthält die Absorptionslösung auch Chloridionen und andere Anionen, aus welchen durch Oxidation flüchtige Gase entstehen, was je nach Brennstoffart und damit nach Zusammensetzung der zu behandelnden Rauchgase möglich ist, so sieht die Erfindung in weiterer Ausgestaltung vor, daß die in der Absorptionslösung enthaltenen Chloridionen sowie die anderen Anionen an die Anode geführt und dort zu gasförmigem Chlor sowie den anderen Anionen entsprechenden Gasen oxidiert und dann abgezogen werden. Auf diese Art und Weise kann die sehr unerwünschte Aufsalzung der Absorptionslösung z.B. durch Natriumchlorid verhindert und außerdem Chlorgas gewonnen werden, das zu einer weiteren Verwendung geführt werden kann.

Eine schematische Wiedergabe des erfindungsgemäßen Verfahrens ist der Fig. 1 zu entnehmen. Die entsprechende Wiedergabe der elektrochemischen Oxidation eines Sulfits und die Bildung von NaOH und $H_2SO_4$ ist der Figur 2 zu entnehmen.

Die in Fig. 1 dargestellte Prozeßführung unter Verwendung einer Kationentauschermembran ist im folgenden näher beschrieben; bei Verwendung einer Anionentauschermembran ist die Prozeßführung entsprechend zu variieren.

Die durch Absorption 1 des $SO_2$ aus dem Rauchgas 2 in Natronlauge entstandene Sulfitlösung 3, die in Natrium ($Na^+$)- und Sulfit ($SO_3^{2-}$)-Ionen dissoziert ist, gelangt in den Anodenraum 4 einer elektrochemischen Zelle 5 mit Kationenaustauschermembran 6, während sich im Kathodenraum 7 Wasser befindet, dessen Leitfähigkeit durch Zugabe z. B. von Natronlauge erhöht wurde. Läßt man durch diese Anordnung einen elektrischen Strom fließen, so wird an der Anode 8 folgende Reaktion ablaufen:

$$SO_3^{2-} + H_2O = SO_4^{2-} + 2H^+ + 2e^-$$

d.h. die Sulfitionen $SO_3^{2-}$ der Natriumsulfitlösung werden zu Sulfationen $SO_4^{2-}$ oxidiert und zusätzlich entstehen $H^+$-Ionen, die mit den $SO_4^{2-}$-Ionen Schwefelsäure bilden. Wegen der eingesetzten Kationenaustauschermembran 6 erfolgt der Stromtransport in der Zelle 5 von der Anode 8 zur Kathode 9 hauptsächlich über die $Na^+$-Ionen, die durch die Membran vom Anodenraum 4 in den Kathodenraum 7 wandern.

An der Kathode 9 läuft folgende Reaktion ab:

$2H_2O + 2e^- = H_2 + 2OH^-$

d.h. an der Kathode 9 wird Wasserstoff entwickelt und es entstehen $OH^-$-Ionen, die mit den aus dem Anodenraum 4 zugewanderten $Na^+$-Ionen Natronlauge bilden, die für den Absorptionsprozeß zur Rauchgasentschwefelung wieder eingesetzt werden kann.

Durch Anwendung dieses Verfahrens wird es also möglich, den bisher getrennt durchgeführten Oxidationsprozeß in den Regenerationsprozeß zu integrieren, und damit das Rauchgasentschwefelungsverfahren zu vereinfachen, wobei als Endprodukte die für den Prozeß wiederverwendbare Natronlauge sowie Schwefelsäure entstehen.

Ein Versuchsaufbau zur experimentellen Überprüfung ist in Fig. 2 dargestellt:

In einem Elektrolysegefäß l0, das durch ein aus einer Kationenaustauschermembran bestehendes Diaphragma 6a in zwei Räume 4a und 7a getrennt war, befand sich eine Anode 8a aus platiniertem Titan, Ti(Pt), und eine Kathode 9a aus Edelstahl, Fe. Im Anodenraum 4a befand sich 0,l molare Natriumsulfitlösung, während der Kathodenraum 7a Wasser enthielt, dessen Leitfähigkeit durch Zugabe von Natronlauge erhöht wurde. Zusätzlich war im Anoden- und Kathodenraum jeweils eine Glaselektrode ll zur Messung der pH-Werte vorhanden.

Bei Anlegen einer Spannung von 4 V floß in dieser Zelle l0 ein Strom von ca. 40 mA. An der Kathode 9a trat sofort nach Stromfluß eine Gasentwicklung auf, welche auf die Entstehung von Wasserstoff zurückzuführen war. Dagegen war an der Anode 8a zunächst keine Gasentwicklung sichtbar, d.h., daß an der Anode 8a eine elektroc hemische Reaktion abläuft, die zur Oxidation des Sulfits unter Bildung von Schwefelsäure führt. Dies konnte durch eine chemische Analyse der Lösung im Anodenraum 4a nach der Elektrolyse nachgewiesen werden.

In dieser Lösung befanden sich jetzt Sulfationen, während Sulfitionen nur noch spurenweise nachgewiesen werden konnten. Die Änderung des pH-Wertes der Lösung von anfänglich 8 auf Werte von ca. 2 im Anodenraum 4a nach der Elektrolyse bestätigte die Säurebildung. Die Bildung von Lauge wurde durch die Erhöhung des pH-Wertes im Kathodenraum 9a im Laufe der Elektrolyse angezeigt.

**Patentansprüche**

l. Verfahren zur Rauchgasentschwefelung, wobei das im Rauchgas enthaltene $SO_2$ in einer wässrigen Lösung absorbiert und die entstandene sulfithaltige Lösung elektrolytisch aufbereitet wird, dadurch gekennzeichnet,daß an der Anode eine elektrochemische Oxidation von $SO_3^{2-}$-Ionen zu $SO_4^{2-}$-Ionen und eine gleichzeitige Bildung von $H^+$-Ionen und damit die Bildung von $H_2 SO_4$ unter Umgehung einer Sauerstoffentwicklung erfolgt.

2. Verfahren nach Anspruch l, dadurch gekenneichnet, daß die $SO_2$-Absorption in wässriger NaOH- oder $Na_2CO_3$-Lösung erfolgt.

3. Verfahren nach Anspruch l oder 2, dadurch gekennzeichnet, daß das Verfahren in einem Reaktionsgefäß mit je mindestens einem Anoden- und Kathodenraum, die durch an sich bekannte Kationen- oder Anionentauschermembranen getrennt sind, durchgeführt wird.

4. Verfahren nach einem der vorangehenden Ansprüche dadurch gekennzeichnet, daß in der Absorptionslösung enthaltene Chloridionen sowie andere Anionen, aus welchen durch Oxidation flüchtige Gase entstehen an die Anode geführt und dort zu gasförmigem Chlor sowie dem anderen Anionen entsprechenden Gasen oxidiert und dann abgezogen werden.

**Claims**

1. A process for de-sulphurising waste gases, the $SO_2$ contained in the waste gas being absorbed in an aqueous solution and the resulting sulphite-containing solution being separated electrolytically, characterised in that at the anode, electrochemical oxidation of $SO_3^{2-}$ ions to $SO_3^{2-}$ ions takes place, with simultaneous formation of $H^+$ ions and hence the formation of $H_2SO_4$, avoiding the formation of oxygen.

2. A process according to claim 1, characterised in that $SO_2$ absorption is carried out in aqueous NaOH or $Na_2CO_3$ solution.

3. A process according to claim 1 or 2, characterized in that the process is carried out in a reactor vessel with at least one anode chamber and at least one cathode chamber, which are separated from one another by cation or anion exchange membranes, which are known per se.

4. A process according to one of the preceding claims, characterised in that chloride ions and other anions contained in the absorption solution, from which volatile gases are produced by oxidation, are guided to the anode and aire oxidised there to form gaseous chlorine and gases corresponding to the other anions, and are then discharged.

**Revendications**

1. Procédé pour la désulfurisation de gaz de fumées, dans lequel le $SO_2$ contenu dans le gaz de fumées est absorbé dans une solution aqueuse et la solution résultante contenant du sulfite est traitée électrolytiquement, caractérisé en ce qu'à l'anode a lieu une oxydation électrochimique des ions $SO_3^{2-}$ en ions $SO_3^{2-}$ et une formation simultanée d'ions $H^+$ et ainsi la formation de $H_2SO_4$, avec évitement d'un dégagement d'oxygène.

2. Procédé selon la revendication 1, caractérisé en ce que l'absorption de $SO_2$ a lieu en solution aqueuse de NaOH ou de $Na_2CO_3$.

3. Procédé selon la revendication 1 et 2, caractérisé en ce que le procédé est effectué dans un récipient de réaction avec à chaque fois au moins une chambre anodique et une chambre cathodique qui sont séparées par des membranes échangeuses de cations ou d'anions connues en soi.

4. Procédé selon l'une des revendications précédentes, caractérisé en ce que les ions chlorure contenus dans la solution d'absorption ainsi que d'autres anions, dont il résulte des gaz volatils par oxydation, sont amenés à l'anode et y sont oxydés en chlore gazeux ainsi qu'en les gaz correspondant aux autres anions, puis sont extraits ou éliminés.

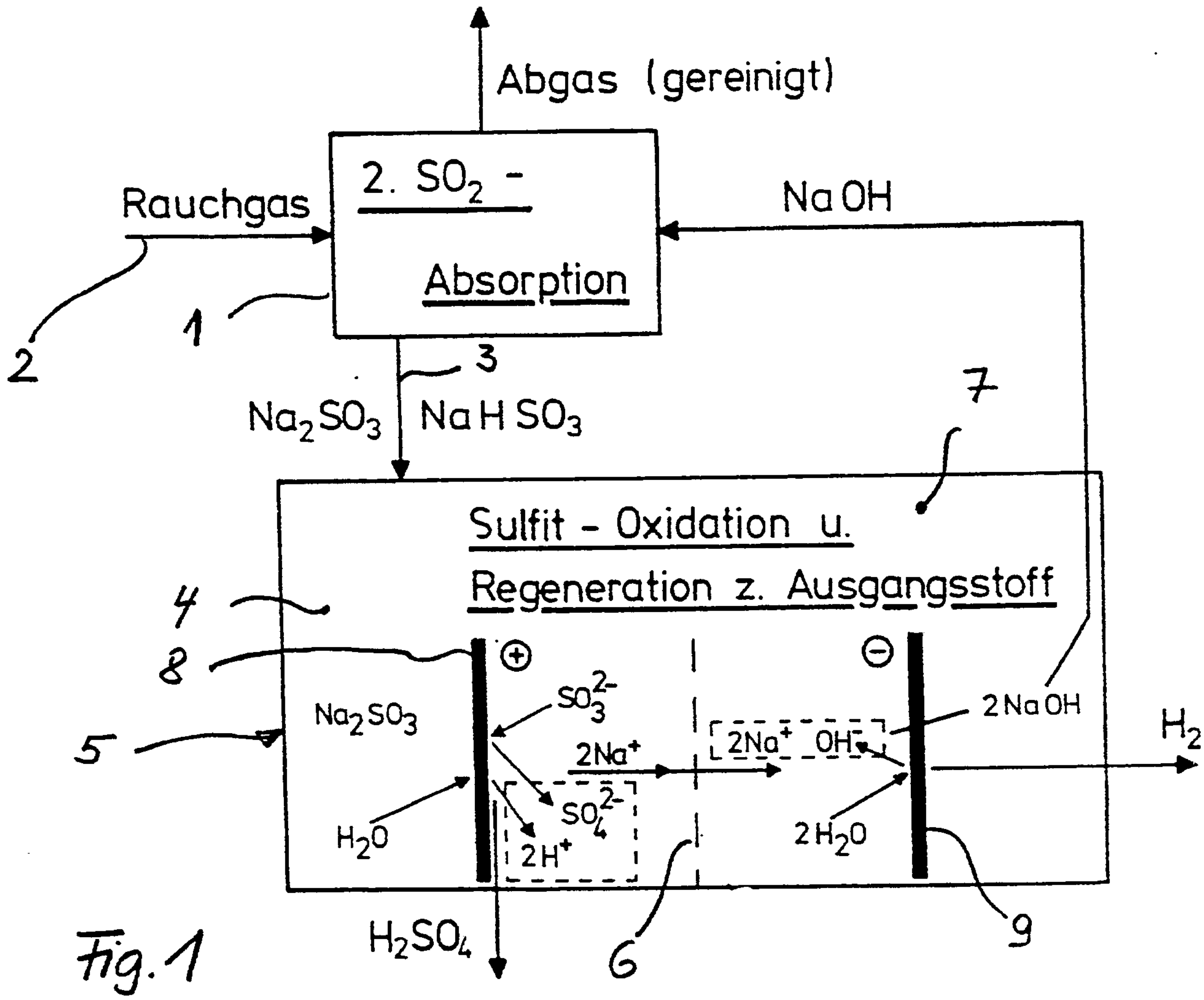
Abgas (gereinigt)
Rauchgas
2. SO2 - Absorption
NaOH
1
2
3
Na2SO3
NaHSO3
7
Sulfit - Oxidation u. Regeneration z. Ausgangsstoff
4
8
5
Na2SO3
SO3 2-
2Na+
2Na+ OH-
2NaOH
H2
H2O
SO4 2-
2H+
2H2O
H2SO4
6
9

Fig. 1

Elektrochemische Oxidation

eines Sulfits unter

Gewinnung von NaOH und $H_2SO_4$

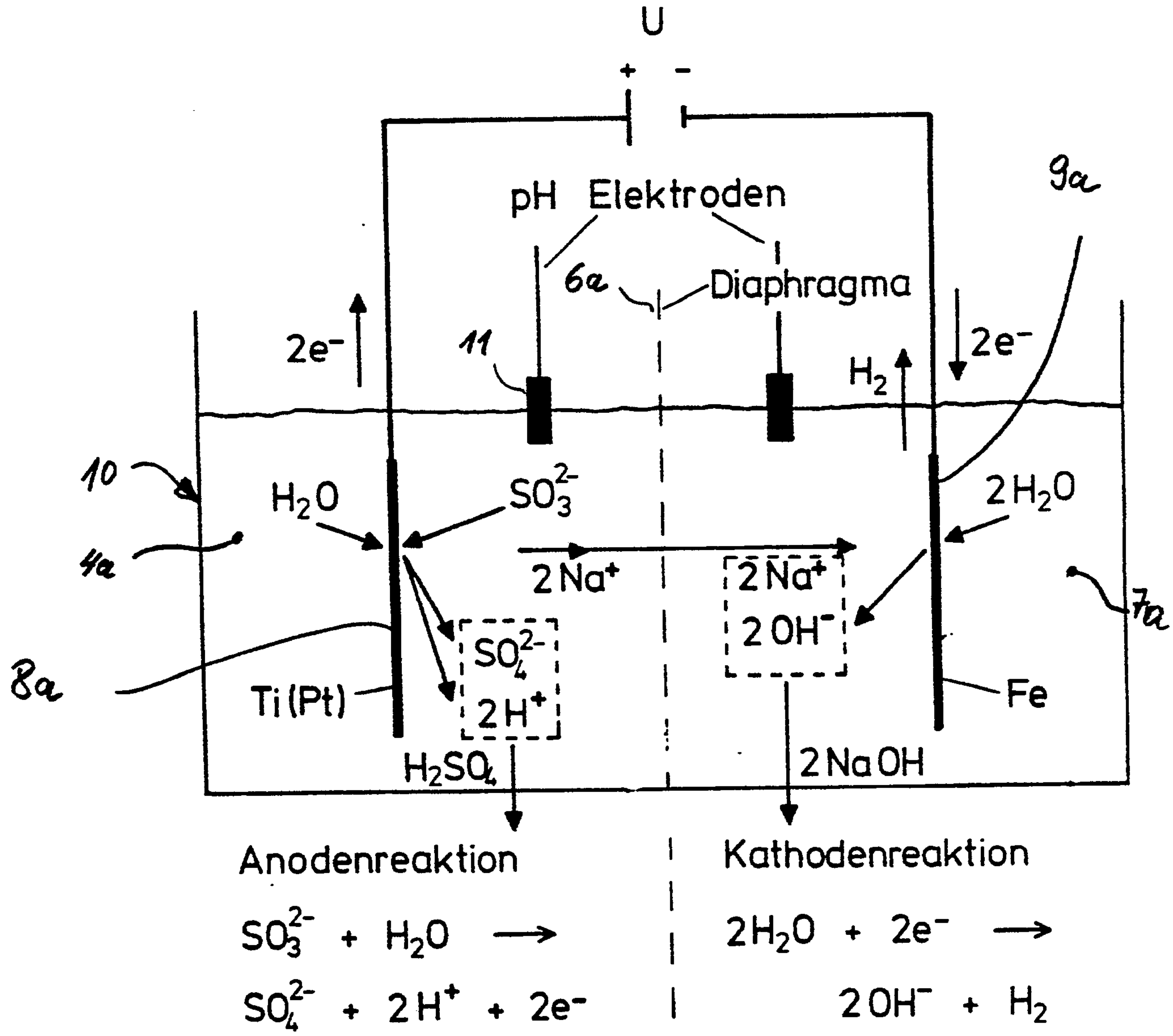


Fig. 2